# FASCICULE DE BREVET EUROPEEN

(11) **EP 4 043 673 B1**
(45) Date de publication et mention de la délivrance du brevet: **02.04.2025**
(21) Numéro de dépôt: 21156656.7
(22) Date de dépôt: 11.02.2021
(51) Int. Cl.: E04H 4/16, B01D 39/08

(54) **SYSTÈME DE FILTRATION À CARTOUCHE CONTENUE DANS UNE POCHE SOUPLE ET ASPIRATEUR ÉQUIPÉ D'UN TEL SYSTÈME**
FILTERSYSTEM MIT KARTUSCHE, DIE IN EINEM FLEXIBLEN BEUTEL ENTHALTEN IST, UND MIT EINEM SOLCHEN SYSTEM AUSGESTATTETER STAUBSAUGER
CARTRIDGE FILTER SYSTEM CONTAINED IN A FLEXIBLE BAG AND VACUUM CLEANER PROVIDED WITH SUCH A SYSTEM

(43) Date de publication de la demande: 17.08.2022
(73) Titulaire: Kokido Development Limited, 999077 Kowloon (HK)
(72) Inventeur: BRUNEEL, Jean, 999077 KOWLOON (HK); ROUMAGNAC, Max, 33127 MARTIGNAS SUR JALLE (FR)
(74) Mandataire: Ipside

(56) Documents cités:
- US-A- 5 338 446
- US-A1- 2008 283 456

## Description

### DOMAINE TECHNIQUE

La présente invention appartient au domaine des dispositifs d'entretien de piscines et analogues, notamment des balais et robots aspirateurs submersibles, et concerne plus particulièrement un système de filtration à cartouche contenue dans une poche souple pour aspirateurs de nettoyage de piscines et un aspirateur équipé d'un tel système.

### ÉTAT DE L'ART

Les aspirateurs pour piscines sont connus et largement répandus dans le commerce sous différentes formes. Qu'il s'agisse de balais manuels ou de robots autonomes, la plupart de ces dispositifs assurent un nettoyage plus ou moins efficace selon la puissance d'aspiration allouée, mais surtout la qualité de filtration. En effet, au fond d'une piscine s'accumulent globalement soit des débris fins tels que des grains de sable et autres particules soit des débris plus volumineux tels que des feuilles mortes. La filtration n'est pas la même pour chaque type de débris. Le demandeur explique bien cette problématique dans le document EP3744927A1 au paragraphe [0014] par exemple.

En règle générale, les particules fines sont filtrées au moyen d'une poche classique à faible porosité. Toutefois, ces poches ont une surface filtrante assez réduite qui se colmate rapidement, et nécessitent donc un lavage fréquent. Cela a donc pour effet d'allonger la durée du nettoyage de la piscine.

Pour augmenter la surface filtrante, les cartouches filtrantes à toile plissée peuvent être utilisées. En raison de leurs nombreuses plissures longitudinales, ces cartouches permettent d'obtenir une surface filtrante assez importante, de retarder le colmatage et d'augmenter la finesse de filtration, tout en présentant une conception cylindrique compacte et donc un encombrement moindre.

De telles cartouches de filtration sont par exemple utilisées dans les balais aspirateurs à effet venturi décrits dans les documents FR2683845 et FR2715960.

Ces cartouches standard ne peuvent cependant pas être montées sur n'importe quel balai aspirateur et nécessitent parfois des moyens d'adaptation.

Le document FR2683845 divulgue un adaptateur qui peut être fabriqué en plusieurs modèles de sorte à ce que le conteneur de la cartouche filtrante soit monté sur n'importe quel balai aspirateur.

Dans d'autres solutions, telles que celle du document FR2715960, le conteneur de la cartouche fait partie intégrante de l'aspirateur.

Dans les deux cas, le conteneur de la cartouche est rigide et présente donc des dimensions fixes qui ne lui permettent de recevoir qu'un seul modèle de cartouche de taille déterminée. De plus, le volume intérieur défini par ces conteneurs rigides reste limité et ne permet pas un bon ramassage des feuilles et autres débris volumineux.

Le document US10711475 décrit quant à lui un porte-filtre permettant de monter une cartouche sur un balai aspirateur en remplacement des poches filtrantes classiques. Ce système de fixation de la cartouche sur le corps du balai - spécifique en fonction de la taille du balai et de celle de la cartouche - est constitué par l'assemblage d'une plaque (en haut) et d'un collier (en bas) reliés par plusieurs tiges filetées avec écrous, afin de fixer une cartouche de grand diamètre intérieur sur le corps du balai.

Le système de fixation de cette solution est complexe et implique une cartouche spéciale. De plus, l'eau chargée pénètre à l'intérieur de la cartouche et est rejetée sur toute sa périphérie. Le volume de stockage des débris correspond au volume intérieur de la cartouche.

Cette solution présente de nombreux inconvénients, notamment l'obligation d'utiliser une cartouche (et donc un ensemble de fixation spécifique) ayant un diamètre intérieur important sensiblement égal au diamètre de l'hélice pour ne pas restreindre la section d'évacuation, ce qui créerait une contre pression et réduirait le débit aspiré, et pour contenir des feuilles. Ce type de cartouche de grand diamètre intérieur est très volumineux, ce qui pénalise le déplacement manuel du balai, présente un coût relativement élevé et n'est pas disponible dans la majorité des magasins spécialisés.

De plus, le montage et le démontage de cette cartouche pour son nettoyage sont peu pratiques car cette dernière comprend des tiges filetées. De surcroit, ce nettoyage reste délicat en raison des débris qui viennent s'entreposer à l'intérieur de la cartouche.

Il convient également de noter que ce système ne permettrait pas d'utiliser des cartouches standard dont le diamètre intérieur est de l'ordre de 40 à 50 mm car, d'un côté, la faible section de passage de l'eau chargée freinerait le débit de l'aspirateur, et d'un autre côté, la surface interne limitée serait très rapidement recouverte par les feuilles.

### PRÉSENTATION DE L'INVENTION

La présente invention vise à pallier les inconvénients de l'art antérieur exposés ci-avant et propose une filtration composée, combinant à la fois une cartouche et une poche souple étanche, efficace aussi bien pour les débris fins que pour les débris volumineux, s'adaptant à différents types d'aspirateurs et d'entretien simplifié.

À cet effet, la présente invention a pour objet un système de filtration pour aspirateur de nettoyage de piscines, comprenant au moins une cartouche de filtration de débris fins, remarquable en ce qu'il comprend une poche souple en matériau étanche, pour collecter des débris volumineux, à l'intérieur de laquelle chaque cartouche de filtration est fixée de sorte que l'intérieur de ladite cartouche communique avec au moins une ouverture d'évacuation ménagée dans ladite poche.

Selon un mode de réalisation, le système de filtration comprend un plateau fermant au moins une cartouche de filtration à une extrémité, pour empêcher des débris volumineux de pénétrer à l'intérieur de ladite cartouche, ladite cartouche étant fixée axialement à la poche souple.

Selon un autre mode de réalisation, au moins une cartouche de filtration est fixée perpendiculairement à la poche souple.

Avantageusement, chaque cartouche de filtration est fixée à la poche souple au moyen d'au moins un manchon tubulaire, ledit manchon traversant la poche souple et pinçant celle-ci contre une extrémité de la cartouche de filtration de manière étanche.

Ainsi, les différents éléments du système de filtration sont amovibles et peuvent être nettoyés séparément, donc plus efficacement, et remplacés au besoin.

Selon un mode de réalisation particulier, le système de filtration comprend en outre un organe central lacunaire par cartouche de filtration, ledit organe étant inséré à l'intérieur de ladite cartouche et dépassant de celle-ci par au moins une extrémité filetée, sur laquelle extrémité est vissé un manchon tubulaire de sorte à appuyer la poche souple contre une flasque de la cartouche de filtration.

Selon un mode de réalisation, chaque manchon tubulaire présente un diamètre différent à chacune de ses extrémités pour s'adapter à différentes tailles de cartouche de filtration.

De façon avantageuse, la poche souple est en matériau transparent.

La poche souple comporte une ouverture apte à être serrée autour d'une partie du corps d'un aspirateur.

L'invention a également pour objet un aspirateur pour piscines, de type balai ou robot, comportant un système de filtration tel que présenté, monté sur une tête d'aspiration de l'aspirateur par exemple.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un système de filtration à cartouche et poche souple conforme aux principes de l'invention.

### BRÈVE DESCRIPTION DES FIGURES

Les figures sont données à titre purement illustratif pour une meilleure compréhension de l'invention et ne limitent pas la portée de celle-ci. Les différents éléments peuvent être représentés de manière schématique et ne sont pas nécessairement à la même échelle. Sur l'ensemble des figures, les éléments identiques ou équivalents portent la même référence numérique.

Il est ainsi illustré en :
- Figure 1 : une vue partielle en perspective d'un aspirateur équipé d'un système de filtration selon l'invention ;
- Figure 2a : une vue schématique en coupe d'un système de filtration selon un premier mode de réalisation de l'invention ;
- Figure 2b : une vue schématique en coupe d'un système de filtration selon un deuxième mode de réalisation de l'invention ;
- Figure 3 : une vue en perspective du système de filtration selon le mode de réalisation de la figure 2b ;
- Figure 4 : une vue en éclaté du montage entre la cartouche et les manchons tubulaires du système de filtration de la figure 3.

### DESCRIPTION DÉTAILLÉE DE MODES DE RÉALISATION

Il convient de noter que certains éléments techniques bien connus de l'homme du métier sont ici décrits pour éviter toute insuffisance ou ambiguïté dans la compréhension de la présente invention.

Dans le mode de réalisation décrit ci-après, on fait référence à un système de filtration comprenant une cartouche contenue dans une poche souple, destiné principalement à un balai aspirateur pour le nettoyage de piscines. Cet exemple, non limitatif, est donné pour une meilleure compréhension de l'invention et n'exclut pas l'utilisation du système de filtration sur un robot aspirateur par exemple.

Dans la suite de la description, le terme « cartouche » désigne une cartouche de filtration de forme généralement cylindrique dont les parois latérales assurent une filtration de particules fines en raison de leur faible porosité, et le terme « aspirateur » désigne par extension un appareil de nettoyage par aspiration, en l'occurrence pour piscines.

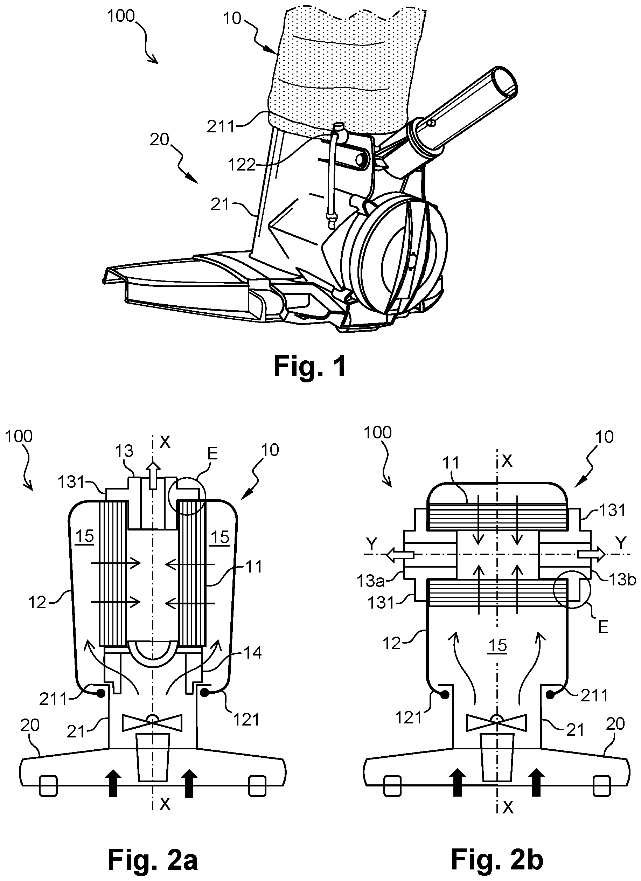

La figure 1 représente partiellement un aspirateur 100, de type balai, équipé d'un système de filtration 10 monté sur une tête d'aspiration 20 de l'aspirateur.

Le système de filtration 10 comprend une cartouche placée à l'intérieur d'une poche souple, cette dernière venant s'enserrer sur la tête d'aspiration 20, et plus précisément sur un conduit principal 21 de celle-ci au niveau d'un bord périphérique 211 dudit conduit. Seule la poche souple est visible sur la figure 1, celle-ci représentant un exemple de réalisation dans lequel la poche est opaque.

Les figures 2a et 2b représentent plus en détail le système de filtration 10 comprenant une cartouche 11, une poche souple 12 et au moins un manchon tubulaire 13 permettant de pincer la poche contre la cartouche, ledit système étant monté sur la tête d'aspiration 20, l'ensemble formant l'aspirateur 100, ou tout du moins sa partie fonctionnelle, selon deux modes de réalisation de l'invention : un premier mode avec une cartouche fixée verticalement et un second mode avec une cartouche fixée horizontalement.

La cartouche 11, selon l'exemple illustré, présente une forme cylindrique creuse de section circulaire, définissant des parois latérales filtrantes caractérisées par leur épaisseur et leur porosité. Ces parois filtrantes sont adaptées à la filtration de particules fines et peuvent être de différents types, de préférence à toile plissée de sorte à ce que la surface filtrante de la cartouche soit considérablement augmentée. La cartouche 11 est fixée à l'intérieur de la poche souple 12.

La poche souple 12, selon l'exemple illustré, est constituée d'un matériau étanche, de préférence élastique pour s'adapter à des cartouches de différentes tailles, aussi bien en longueur qu'en diamètre. Plus préférablement encore, la poche souple 12 présente une forme par défaut (relâchée) permettant de définir un volume intérieur 15 suffisant pour à la fois recevoir la cartouche 11 et accumuler une quantité déterminée de débris volumineux (feuilles). Autrement dit, le volume intérieur 15 doit correspondre à une capacité de stockage de débris suffisante.

L'élasticité de la poche souple 12 n'est toutefois pas nécessaire à condition que celle-ci présente un volume adapté aux cartouches 11 de grande taille qui existent dans le commerce.

La poche souple 12 peut être opaque ou transparente, de préférence transparente pour permettre à l'utilisateur de visualiser son niveau de remplissage en débris volumineux ou l'état d'encrassement de la cartouche avant de procéder, si nécessaire, à un nettoyage.

La poche souple 12 s'enfile sur le conduit principal 21 de la tête d'aspiration 20 par son ouverture inférieure 121. En effet, l'ouverture inférieure 121 est placée autour du bord périphérique 211 du conduit 21 et comprend des moyens de serrage adaptés de sorte à assurer une fermeture empêchant les débris volumineux ramassés de retomber dans l'eau de la piscine.

L'ouverture inférieure 121 de la poche souple 12 peut donc être élastique, par la présence d'une bande élastique annulaire dissimulée dans le matériau constitutif de la poche par exemple, ou simplement comporter des moyens de serrage adaptés tels qu'un cordon de serrage 122 muni d'un bouton d'arrêt à ressort représenté sur la figure 1.

Plus généralement, la poche souple 12 peut se fixer sur le corps de l'aspirateur 100 de la même manière que des poches filtrantes traditionnelles sans accessoire supplémentaire.

La poche souple 12 comporte en outre au moins une ouverture d'évacuation contre laquelle la cartouche 11 est positionnée axialement, et dans laquelle vient s'insérer le manchon tubulaire 13 pour pincer la poche contre ladite cartouche.

Le manchon tubulaire 13, selon l'exemple illustré, est conformé pour fixer la cartouche 11 contre la poche souple 12 soit par vissage soit par déformation élastique, et permet d'évacuer l'eau filtrée. En effet, le manchon tubulaire 13 comporte une ouverture axiale traversante permettant l'évacuation de l'eau filtrée et une surface d'appui annulaire 131 permettant d'appuyer la poche souple 12, plus précisément le bord périphérique de l'ouverture d'évacuation ménagée dans ladite poche, contre l'extrémité de la cartouche 11 de sorte à assurer une étanchéité E au niveau de cette surface d'appui.

Le manchon tubulaire 13 peut être fixé à la cartouche 11 de différentes manières, à l'intérieur ou à l'extérieur de celle-ci, et avec ou sans éléments de jonction.

Le manchon tubulaire 13 peut être réversible et présenter un diamètre différent à chacune de ses extrémités pour pouvoir s'adapter à deux tailles de cartouche.

La figure 2a représente le système de filtration 10 monté sur la tête d'aspiration 20 selon un premier mode de réalisation dans lequel la cartouche 11 est placée verticalement, et donc parallèlement à un axe longitudinal X de la tête d'aspiration. De préférence, l'axe X et l'axe de la cartouche sont sensiblement confondus.

Dans cette configuration, le système de filtration 10 comporte un seul manchon tubulaire 13, disposé axialement au sommet de la poche souple 12. De ce fait, la poche souple comprend une seule ouverture d'évacuation de l'eau filtrée.

Néanmoins, et en raison de sa position axiale au-dessus du conduit d'aspiration 21, le système de filtration 10 comporte en outre un plateau support 14 muni d'un déflecteur central du flux aspiré et de pieds espacés reposant sur le bord périphérique 211 dudit conduit.

Par exemple, le plateau support 14 peut présenter une forme globalement circulaire et comporter trois pieds agencés en triangle pour entraver le moins possible le passage de l'eau aspirée vers le volume intérieur 15 de la poche souple 12.

Ainsi, l'eau sale aspirée (représentée par des flèches épaisses noires) pénètre dans le système d'aspiration 10 en traversant latéralement le plateau support 14, en passant entre les pieds de ce dernier, avant de traverser les parois latérales de la cartouche 11 en laissant les débris volumineux (feuilles) dans le volume intérieur 15 de la poche 12, et enfin de ressortir filtrée par l'ouverture axiale du manchon tubulaire 13 (flèche épaisse blanche).

La figure 2b représente le système de filtration 10 monté sur la tête d'aspiration 20 selon un deuxième mode de réalisation dans lequel la cartouche 11 est placée horizontalement, et donc perpendiculairement à l'axe longitudinal X de la tête d'aspiration. Autrement dit, l'axe X est perpendiculaire à un axe longitudinal Y de la cartouche 11 et, par là-même, des manchons tubulaires 13a et 13b.

Dans cette configuration, le système de filtration 10 comporte deux manchons tubulaires 13a et 13b, un à chaque extrémité de la cartouche 11. De ce fait, la poche souple 12 présente deux ouvertures d'évacuation latérales, une de chaque côté. Les deux manchons 13a et 13b sont de préférence identiques et fixés de la même façon.

Ainsi, l'eau sale aspirée remonte directement dans la poche souple 12, y laisse les débris volumineux et traverse ensuite les parois latérales de la cartouche 11 pour filtrer les particules fines avant de dévier latéralement vers les ouvertures d'évacuation et en ressortir filtrée.

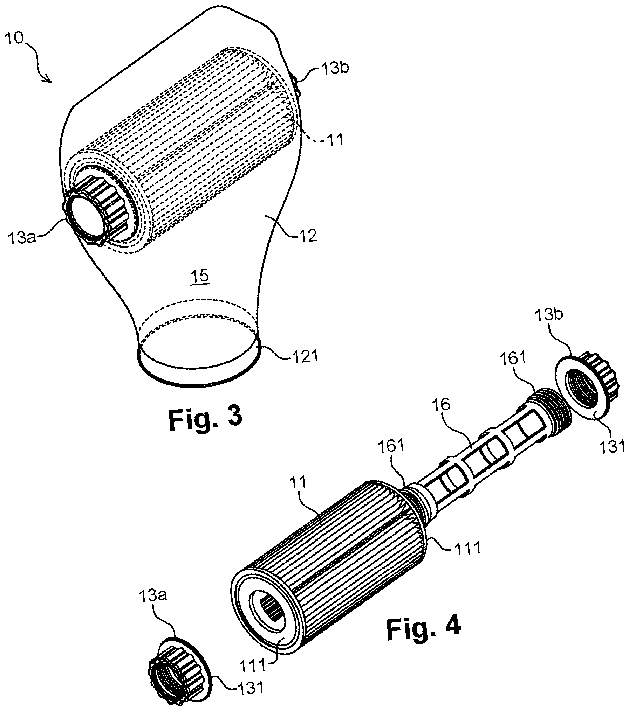

La figure 3 représente le système de filtration 10 selon ce mode de réalisation, dans lequel la cartouche 11 est placée horizontalement dans la poche souple 12, tenue par deux manchons tubulaires 13a et 13b.

La figure 4 représente le montage spécifique entre la cartouche 11 et les manchons tubulaires 13a et 13b, correspondant au mode de réalisation de la figure 3.

En effet, pour ce montage spécifique, le système de filtration comprend en outre un organe central 16 cylindrique et lacunaire pour ne pas gêner la filtration, qui s'insère à l'intérieur de la cartouche 11 et se termine par deux extrémités filetées 161. Ces extrémités filetées 161 restent à l'extérieur de la cartouche 11, lorsque l'organe central 16 est positionnée dans celle-ci, et reçoivent chacune un manchon tubulaire 13a ou 13b par vissage jusqu'à ce que les surfaces d'appui annulaires 131 s'accolent aux flasques 111 de la cartouche. Bien entendu, la poche souple 12 se retrouve alors pincée entre les surfaces d'appui annulaires 131 des manchons tubulaires et les flasques 111 de la cartouche.

Il ressort clairement de la présente description que certains éléments du système de filtration peuvent être modifiés, remplacés ou supprimés et que certains ajustements peuvent être apportés à l'utilisation de ce système, sans pour autant sortir du cadre de l'invention, définit par les revendications ci-jointes.

Par exemple, le système de filtration peut comporter deux ou plusieurs cartouches juxtaposées ou superposées à l'intérieur de la poche souple avec autant d'ouvertures d'évacuation dans la poche que nécessaire.

## Revendications

1. Système de filtration (10) pour aspirateur (100) de nettoyage de piscines, comprenant au moins une cartouche de filtration (11) de débris fins, **caractérisé en ce qu'**il comprend une poche souple étanche (12) en matériau étanche,
pour collecter des débris volumineux, à l'intérieur de laquelle chaque cartouche de filtration est fixée de sorte que l'intérieur de ladite cartouche communique avec au moins une ouverture d'évacuation de ladite poche.

2. Système de filtration selon la revendication 1, comprenant un plateau (14) fermant au moins une cartouche de filtration (11) à une extrémité, pour empêcher des débris volumineux de pénétrer à l'intérieur de ladite cartouche, et dans lequel ladite cartouche est fixée axialement à la poche souple (12).

3. Système de filtration selon la revendication 1, dans lequel au moins une cartouche de filtration (11) est fixée perpendiculairement à la poche souple (12).

4. Système de filtration selon l'une quelconque des revendications précédentes, dans lequel chaque cartouche de filtration (11) est fixée à la poche souple (12) au moyen d'au moins un manchon tubulaire (13), ledit manchon traversant la poche souple et pinçant celle-ci contre une extrémité de la cartouche de filtration de manière étanche.

5. Système de filtration selon la revendication 4, comprenant en outre un organe central (16) lacunaire par cartouche de filtration (11), ledit organe étant inséré à l'intérieur de ladite cartouche et dépassant de celle-ci par au moins une extrémité filetée (161) sur laquelle extrémité est vissé un manchon tubulaire (13) de sorte à appuyer la poche souple (12) contre une flasque (111) de la cartouche de filtration.

6. Système de filtration selon la revendication 4, dans lequel chaque manchon tubulaire (13) présente un diamètre différent à chacune de ses extrémités pour s'adapter à différentes tailles de cartouche de filtration.

7. Système de filtration selon l'une quelconque des revendications précédentes, dans lequel la poche souple (12) est en matériau transparent.

8. Système de filtration selon l'une quelconque des revendications précédentes, dans lequel la poche souple comporte une ouverture (121) apte à être serrée autour d'une partie du corps d'un aspirateur (100).

9. Aspirateur (100) pour piscines, de type balai ou robot, **caractérisé en ce qu'**il comporte un système de filtration selon l'une quelconque des revendications précédentes.

## Patentansprüche

1. Filtersystem (10) für einen Staubsauger (100) zum Reinigen von Schwimmbecken, umfassend mindestens eine Filterkartusche (11) für feine Verschmutzungen, **dadurch gekennzeichnet, dass** es einen wasserdichten, flexiblen Beutel (12) aus wasserdichtem Material zum Sammeln von großen Verschmutzungen umfasst, in dem jede Filterkartusche derart befestigt ist, dass das Innere der Kartusche mit mindestens einer Auslassöffnung des Beutels in Verbindung steht.

2. Filtersystem nach Anspruch 1, das eine Platte (14) umfasst, die die mindestens eine Filterkartusche (11) an einem Ende verschließt, um zu verhindern, dass große Verschmutzungen in das Innere der Kartusche eindringt, und wobei die Kartusche axial am flexiblen Beutel (2) befestigt ist.

3. Filtersystem nach Anspruch 1, wobei die mindestens eine Filterkartusche (11) senkrecht am flexiblen Beutel (12) befestigt ist.

4. Filtersystem nach einem der vorhergehenden Ansprüche, wobei jede Filterkartusche (11) durch mindestens eine rohrförmige Hülse (13) an dem flexiblen Beutel (12) befestigt ist, wobei die Hülse durch den flexiblen Beutel verläuft und diesen wasserdicht an einem Ende der Filterkartusche festhält.

5. Filtersystem nach Anspruch 4, das ferner ein lückenhaftes zentrales Element (16) pro Filterkartusche (11) umfasst, wobei das Element in das Innere der Kartusche eingesetzt ist und mit mindestens einem Gewindeende (161) aus diesem hervorsteht, wobei auf das Ende mindestens eine rohrförmige Hülse (13) derart aufgeschraubt ist, dass der flexible Beutel (12) gegen einen Flansch (111) der Filterkartusche gedrückt wird.

6. Filtersystem nach Anspruch 4, wobei jede rohrförmige Hülse (13) an jedem ihrer Enden einen unterschiedlichen Durchmesser aufweist, um sich an verschiedene Größen der Filterkartusche anzupassen.

7. Filtersystem nach einem der vorhergehenden Ansprüche, wobei der flexible Beutel (12) aus einem transparenten Material besteht.

8. Filtersystem nach einem der vorhergehenden Ansprüche, wobei der flexible Beutel eine Öffnung (121) umfasst, die so ausgelegt ist, dass sie um einen Teil des Körpers eines Staubsaugers (100) herum festgeklemmt werden kann.

9. Staubsauger (100) für Schwimmbecken vom Bürsten- oder Robotertyp, **dadurch gekennzeichnet, dass** er ein Filtersystem nach einem der vorhergehenden Ansprüche umfasst.

## Claims

1. Filtration system (10) for a vacuum cleaner (100) for cleaning swimming pools, comprising at least one cartridge (11) for filtering fine debris, **characterized in that** it comprises an impervious flexible bag (12) made from impervious material, for collecting bulky debris, inside which each filtration cartridge is secured so that the interior of each cartridge communicates with at least one discharge opening of said bag.

2. Filtration system according to claim 1, comprising a plate (14) closing at least one filtration cartridge (11) at one end, to prevent bulky debris from entering inside said cartridge, and wherein said cartridge is secured axially to the flexible bag (12).

3. Filtration system according to claim 1, wherein at least one filtration cartridge (11) is secured perpendicularly to the flexible bag (12).

4. Filtration system according to any one of the preceding claims, wherein each filtration cartridge (11) is secured to the flexible bag (12) by means of at least one tubular sleeve (13), said sleeve passing through the flexible bag and gripping same against one end of the filtration cartridge sealingly.

5. Filtration system according to claim 4, furthermore comprising one lacunar central member (16) per filtration cartridge (11), said member being inserted inside said cartridge and projecting therefrom through at least one threaded end (161), on which end a tubular sleeve (13) is screwed so as to press the flexible bag (12) against a flange (111) of the filtration cartridge.

6. Filtration system according to claim 4, wherein each tubular sleeve (13) has a different diameter at each of the ends thereof to adapt to various sizes of filtration cartridge.

7. Filtration system according to any one of the preceding claims, wherein the flexible bag (12) is made from transparent material.

8. Filtration system according to any one of the preceding claims, wherein the flexible bag includes an opening (121) able to be gripped around a part of the body of a vacuum cleaner (100).

9. Vacuum cleaner (100) for swimming pools, of the brush or robot type, **characterized in that** it includes a filtration system according to any one of the preceding claims.
